# EUROPÄISCHE PATENTSCHRIFT

(11) **EP 1 777 112 B1**
(45) Veröffentlichungstag und Bekanntmachung des Hinweises auf die Patenterteilung: **15.10.2008**
(21) Anmeldenummer: 06021786.6
(22) Anmeldetag: 18.10.2006
(51) Int. Cl.: B60R 11/02

(54) **Kraftfahrzeug mit optimal positioniertem Antennenverbindungsstecker**
Optimal location for a vehicle aerial connector.
Position optimale d'un connecteur d'antenne pour véhicule

(30) Priorität: 20.10.2005 DE 102005050256
(43) Veröffentlichungstag der Anmeldung: 25.04.2007
(73) Patentinhaber: GM Global Technology Operations, Inc., Detroit, MI 48265-3000 (US)
(72) Erfinder: Ahlburg, Ralf, 67294 Gauersheim (DE)
(74) Vertreter: Daniel, Ulrich W.P.

(56) Entgegenhaltungen:
- EP-A- 0 181 765
- EP-A1- 0 182 614
- EP-A1- 0 183 521
- EP-A2- 0 196 209
- JP-A- 60 166 569
- JP-A- 62 015 146

## Beschreibung

Die Erfindung betrifft ein Kraftfahrzeug, insbesondere ein Personenkraftfahrzeug, mit einem Antennenverbindungsstecker für die Dachantenne nach dem Oberbegriff von Anspruch 1.

Personenkraftfahrzeuge besitzen vielfach eine nahe des hinteren Dachrahmens angeordnete Dachantenne, die bezogen auf die Fahrzeuglängsrichtung mittig angeordnet ist. Von der Dachantenne führt ein Antennenkabel in das Fahrzeuginnere, um an geeigneter Stelle über einen Antennenverbindungsstecker mit dem zugehörigen Kabel der Fahrzeugkarosserie verbunden zu werden.

Herkömmlicherweise befindet sich der Antennenverbindungs-stecker fahrzeuginnenseitig auf einem zum hinteren Dachrahmen gehörigen Blech. Der Fahrzeugentwickler bestimmt eine geeignete Stelle für den Antennenverbindungsstecker und passt die Länge des Kabels entsprechend an. Diese Vorgehensweise ist nicht möglich, wenn ein und dasselbe Antennenkabel für mehrere Fahrzeugmodelle eingesetzt werden soll. In diesem Fall ist nämlich dem Fahrzeugentwickler eine feste Kabellänge vorgegeben, und es sind die Wahlmöglichkeiten für günstige Positionen des Antennenverbindungssteckers eingeschränkt.

Je nachdem, wo der Antennenverbindungsstecker angeordnet ist, haben die Fahrzeuginsassen in der hintersten Sitzreihe ein Mehr oder ein Weniger an Kopffreiheit. Grund ist, dass der Antennenverbindungsstecker in jedem Fall kopfnah zu liegen kommt und im Positionierungsbereich in den Fahrzeuginnenraum hineinragt. Dieses Problem wird üblicherweise so gelöst, dass in der Entwicklungsphase für jedes Fahrzeugmodell eine diesen Aspekt berücksichtigende individuelle Innenraumoptimierung vorgenommen wird, wobei unter anderem die Länge des Antennenkabels angepasst wird. Kann der Entwickler bei dem jeweiligen Fahrzeugmodell die Länge des Antennenkabels nicht individuell wählen, weil ein Antennenkabel fester Länge vorgegeben ist, so bedingt dies eine nur unbefriedigende Kopffreiheit in der hintersten Sitzreihe, und damit einen unbefriedigenden Fahrkomfort.

Die EP 0 183 521 A1 offenbart ein Antennensystem für ein Kraftfahrzeug zum Erfassen der durch Radiowellen in der Karosserie induzierten elektrischen Ströme. Der HF-Aufnehmer des Antennensystems befindet sich im hinteren Teil des Fahrzeugs festgeklemmt am Rand eines Gewichtsreduzierungslochs.

Ausgehend von diesem Stand der Technik ist es die Aufgabe der vorliegenden Erfindung, ein Kraftfahrzeug mit einem Antennenverbindungsstecker so weiterzuentwickeln, dass bei fest vorgegebener Länge des Antennenkabels für jedes Fahrzeugmodell die Kopffreiheit in der hintersten Sitzreihe möglichst wenig durch den Antennenverbindungsstecker eingeschränkt wird.

Die Lösung dieser Aufgabe erfolgt mit den Merkmalen des unabhängigen Anspruchs. Vorteilhafte Weiterbildungen werden durch die abhängigen Ansprüche wiedergegeben.

Die erfindungsgemäße Lösung sieht ein Kraftfahrzeug mit einem Gewichtsreduzierungsloch im hinteren Dachrahmen oder in einem dem hinteren Dachrahmen zugeordneten Verstärkungsblech vor. Das Fahrzeug besitzt ferner einen Antennenverbindungsstecker, der, bezogen auf eine Richtung entgegengesetzt zur Fahrzeuglängsrichtung, also in Richtung zum hinteren Teil des Fahrzeugs bzw. im Fahrzeug mit Blick nach hinten, zumindest teilweise hinter der durch das Gewichtsreduzierungsloch aufgespannten Fläche angeordnet ist.

Die vorgeschlagene Lösung maximiert die Kopffreiheit in der hintersten Sitzreihe auf einfache Weise, und zwar fahrzeugmodellübergreifend. Für jedes Fahrzeugmodell ist lediglich ein der Reduzierung des Bauteilgewichts dienendes Gewichtsreduzierungsloch im Dachrahmen oder einem dem Dachrahmen zugeordneten Verstärkungsblech erforderlich. Die Position des Gewichtsreduzierungslochs im Verstärkungsblech orientiert sich hierbei an der Länge des Antennenkabels und seine Größe ist an die Größe des Antennenverbindungssteckers angepasst. Das Gewichtsreduzierungsloch ist entweder bereits vorhanden oder wird für die vorliegende Erfindung neu geschaffen oder repositioniert. Der Antennenverbindungsstecker wird im Gewichtsreduzierungsloch positioniert, und zwar so, dass er zumindest teilweise hinter der durch das Gewichtsreduzierungsloch aufgespannten Fläche angeordnet ist. Hinter dieser Lochfläche bedeutet hierbei, dass der Antennenverbindungsstecker auf der dem Außenbereich zugewandten Seite des Dachrahmens bzw. des Verstärkungsblechs zu liegen kommt. Durch seine versenkte Lage ragt der Antennenstecker nicht mehr oder nicht mehr so stark in den Fahrzeuginnenraum hinein und beschränkt nicht mehr die Kopffreiheit in der hintersten Sitzreihe. Eine hinsichtlich dieses Aspekts erforderliche Innenraumoptimierung kann damit entfallen.

Die Lösung ermöglicht es, für alle Fahrzeugmodelle den gleichen Antennenverbindungsstecker und dasselbe Antennenkabel einzusetzen. Dies reduziert die Anzahl der bei einem Hersteller von Kraftfahrzeugen vorzuhaltenden Teile auf ein Minimum und ermöglicht wegen der einzigen Ausführungsform dieser Teile hohe Stückzahlen bei minimalen Kosten. Weiterhin geht der Einsatz des fahrzeugmodellübergreifend eingesetzten Antennenverbindungssteckers nicht zu Lasten der Kopffreiheit und führt auch nicht zu einer ansonsten erforderlichen Absenkung des Formhimmels mit damit verbundener eingeschränkter Sicht des Fahrers nach hinten.

Die erhöhte Kopffreiheit in der hintersten Sitzreihe wird erzielt, ohne dass der Formhimmel nebst Dach konstruktiv aufwendig angehoben werden müssten. Der konstruktive Aufwand zur Verbesserung der Kopffreiheit ist damit minimal.

Bevorzugterweise befindet sich das Gewichtsreduzierungsloch in einem Abstand von etwa 100 mm bis etwa 150 mm, gerechnet von der Mitte des Fahrzeugs in Fahrzeugquerrichtung. Dies ermöglicht den Einsatz von Antennenkabeln mit einer Länge von ca. 240 mm bis 300 mm, bevorzugt von einer Länge von ca. 270 mm.

Der Rand des Gewichtsreduzierungslochs ist in einer bevorzugten Ausführungsform zumindest teilweise abgekantet. Hierdurch wird verhindert, dass das Antennenkabel an der Kante des Gewichtsreduzierungslochs abgeknickt wird und es ggf. zu einem Kabelbruch kommt. Das Gewichtsreduzierungsloch kann hierbei als Kragenloch ausgebildet sein.

Die Halterung des Antennenverbindungssteckers in und/oder hinter der aufgespannten Fläche des Gewichtsreduzierungslochs kann auf mehrere Weisen erfolgen. Bevorzugt ist, wenn für den Antennenverbindungsstecker ein mit dem Verstärkungsblech einstückig ausgebildeter Halter vorgesehen ist. Eine einfache Lösung besteht darin, einen Teil der Fläche des Gewichtsreduzierungslochs als Halterung vorzusehen. Beim Ausstanzen des Gewichtsreduzierungslochs bleibt dieser Teil übrig und wird dann zur Außenseite des Fahrzeugs hin umgeknickt. Die Montage wird hierbei vereinfacht, wenn die Halterung eine den Antennenverbindungsstecker aufnehmende Öffnung besitzt in welche dieser hineingedrückt wird und ggf. mit dieser verrastet.

Weitere Merkmale und Vorteile der Erfindung werden aus der folgenden detaillierten Beschreibung mit Bezug auf die beigefügten Zeichnungen erkennbar die nachfolgend als nicht beschränkende Beispiele angegeben sind. Es stellt dar:
- Figur 1: ein Verstärkungsblech zum hinteren Dachquerträger mit Gewichtsreduzierungsloch,
- Figur 2: den Einbaubereich des Antennenverbindungssteckers ohne Einsatz der Erfindung,
- Figur 3: den Einbaubereich des Antennenverbindungssteckers mit Einsatz der Erfindung.
- Figur 4: einen Antennenverbindungsstecker im Gewichtsreduzierungsloch, teilweise hinter der vom Gewichtsreduzierungsloch aufgespannten Lochfläche positioniert.
- Figuren 5,6,7: Schnitte durch den Antennenverbindungsstecker der Figur 4.

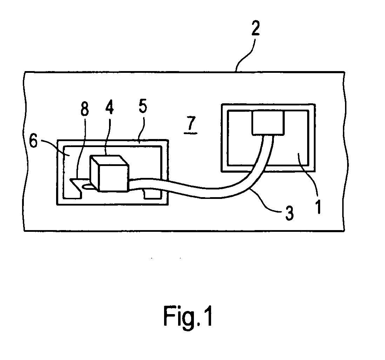

Figur 1 zeigt das am hinteren Dachrahmen 1 eines Personenkraftfahrzeugs befestigte Verstärkungsblech 2. Von der nicht dargestellten Dachantenne kommt ein Antennenkabel 3 der Kabellänge 270 mm. Abschlusseitig besitzt das Antennenkabel 3 einen Antennenverbindungsstecker 4 um es mit dem Bordkabelnetz zu verbinden.

Der Antennenverbindungsstecker 4 befindet hinter einem mit einer Abkantung 5 versehenen Gewichtsreduzierungsloch 6. Der Antennenverbindungsstecker 4 ist hierbei so positioniert, dass er teilweise unterhalb der Oberfläche 7 des Verstärkungsblechs 2 zu liegen kommt. Mehr Kopffreiheit lässt sich gewinnen, wenn eine vollständige Integration des Antennensteckers in die Struktur realisiert wird.

Das Gewichtsreduzierungsloch 6 hat prinzipiell eine beliebige Form. Zwecks Realisierung einer maximalen Kopffreiheit wird es bevorzugt so groß gewählt, dass der komplette Antennenverbindungsstecker versenkt platziert werden kann. Im vorliegenden Beispiel ist das Gewichtsreduzierungsloch 6 rechteckigen Zuschnitts und hat Abmessungen von ca. (110 x 40) mm. Beim Ausstanzen des Gewichtsreduzierungslochs 6 verblieb ein Teil seiner Fläche der nun als Halter 8 dient. Der Halter 8 besitzt eine Aussparung 9, in der der Antennenverbindungsstecker 4 einrasten kann.

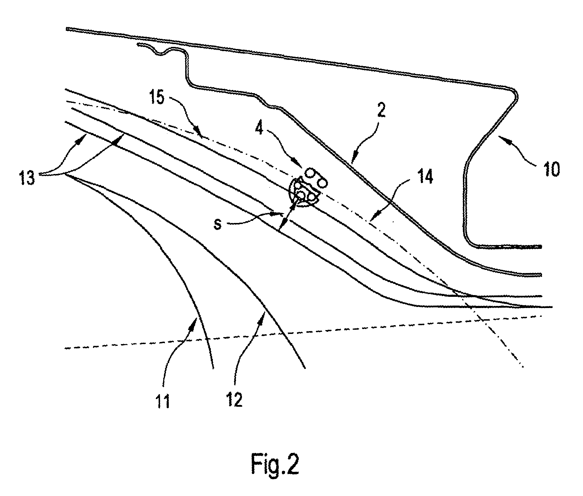

Figur 2 zeigt den Einbaubereich des Antennenverbindungs-steckers 4 ohne Einsatz der Erfindung und ohne örtlich optimierten Formhimmelträger, und zwar als Schnitt senkrecht zur besagten Oberfläche 7 des Verstärkungsblechs 2. Im Bereich des Wasserkanals 10 der Heckklappe bzw. am hinteren Dachrahmen 1 befindet sich das Verstärkungsblech 11. Auf dem Verstärkungsblech 2 befindet fahrrauminnenseitig der Antennenverbindungsstecker 4.

Sitzt eine Person in der hintersten Sitzreihe und sieht in Fahrtrichtung, so definiert seine Kopfoberfläche bei einer Nickbewegung die Kopflinien 11 und 12. Die Kopflinie 11 beschreibt die Kontur des Kopfes, wohingegen die Kopflinie 12 die Schwinglinie des Kopfes bei einer Nickbewegung wiedergibt. Für einen hohen Fahrkomfort sollte der Kopf dieser Person einen genügenden Abstand vom Formhimmel 13 des Fahrzeuginnenraums haben. Die Linie 14 gibt die Linie des geforderten Kopfraumes wieder, und die Linie 15 eine theoretische Formhimmellinie ohne Antennenkabeleinfluss.

Der Formhimmel 13 ist eine Strecke s vom Antennenverbindungsstecker 4 beabstandet. Die Strecke s beträgt im Beispiel etwa 12 mm bis 15 mm. Eine Realisierung der gewünschten Kopffreiheit, durch die Soll-Kopflinie 14 definiert, ist nach dem Stand der Technik nicht möglich. Grund ist, dass der Antennenverbindungsstecker 4 in den Fahrzeuginnenraum hineinragt.

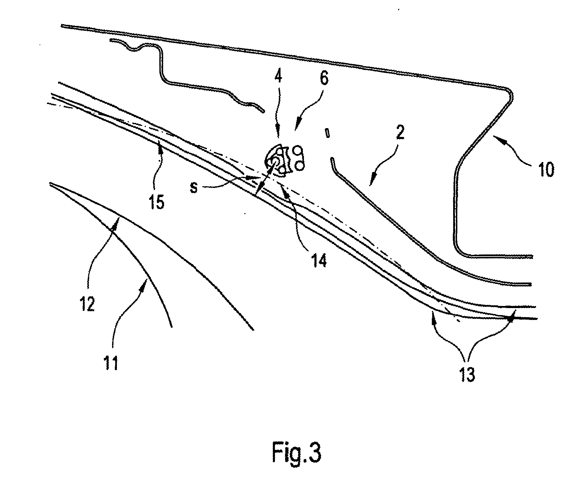

Figur 3 zeigt den zu Figur 2 entsprechenden Einbaubereich desselben Fahrzeugmodells von Figur 2 unter Einsatz der Erfindung. Der Antennenstecker 4 befindet sich nun teilweise im Gewichtsreduzierungsloch 6 und ist damit weiter vom Formhimmel 13 entfernt. Damit lässt sich bei der Fahrzeugentwicklung der Formhimmel 13 in Richtung des Verstärkungsblechs 2 verlegen. Dies hat zur Folge hat, dass die Formhimmelfläche fahrzeuginnenseitig weiter nach hinten verschoben werden kann und dadurch die Kopffreiheit vergrößert wird. Des weiteren wird der Formhimmelträger örtlich im Bereich des Antennenverbindungssteckers auf ein Minimum verpresst. Die sich damit einstellende Änderung der Strecke s um 2-4 mm vergrößert die Kopffreiheit einer Person in der hintersten Sitzreihe zusätzlich und erhöht den Fahrkomfort noch weiter.

Die mit der Erfindung realisierte Formhimmellinie 13 ist in Figur 3 eingezeichnet und veranschaulicht durch den Abstand der Linien 13 und 14 den Gewinn an Kopffreiheit.

Die erhöhte Kopffreiheit in der hintersten Sitzreihe wird erzielt, ohne dass der Formhimmel 13 nebst Dach konstruktiv aufwendig angehoben werden müsste. Der konstruktive Aufwand zur Verbesserung der Kopffreiheit ist damit minimal. Gleichzeitig hat der Fahrer eine unveränderte freie Sicht nach hinten.

Selbstverständlich ist es bei als ausreichend erachteter Kopffreiheit, z.B. bei einem relativ hoch gebautem Dach, auch möglich, die Erfindung dahingehend zu nutzen, dass die Kopffreiheit unverändert bleibt und das Dach mit dem hinteren Dachrahmen weiter nach unten gezogen wird. Das Fahrzeug wird dadurch flacher, der Fahrwiderstand kleiner und der Kraftstoffverbrauch sinkt, ohne dass die Fahrer eine verschlechterte Sicht nach hinten durch einen abgesenkten Formhimmel hätte.

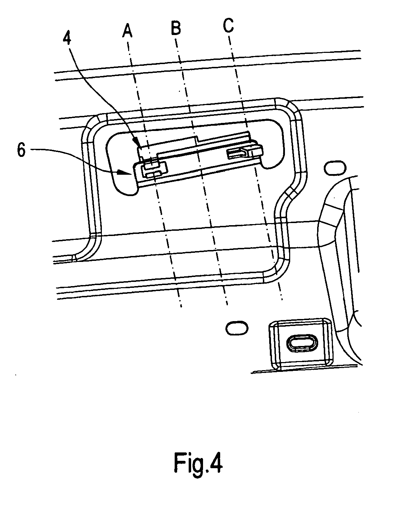

Figur 4 zeigt ausschnittsweise ein dem Dachrahmen 1 zugeordneten Verstärkungsblech 2 mit einem Gewichtsreduzierungsloch 6. Im Gewichtsreduzierungsloch 6 befindet sich der Antennenverbindungssstecker 4.

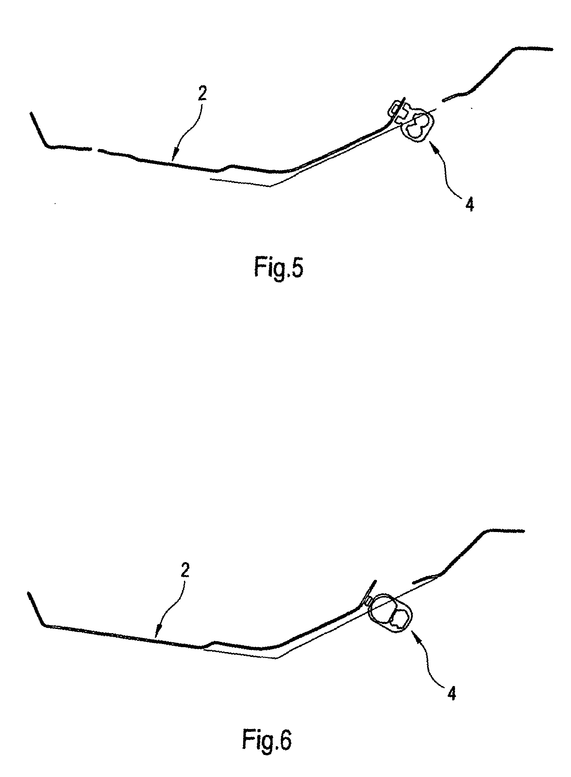

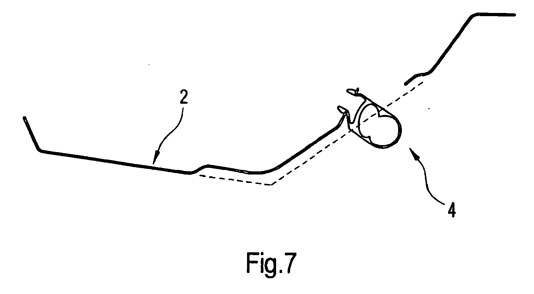

Zur Veranschaulichung der Position des Antennenverbindungssteckers 4 in Relation zu der durch das Gewichtsreduzierungsloch aufgespannten Ebene dienen die Figuren 5,6, und 7. Sie zeigen nacheinander die drei Schnitte C, B und A senkrecht zur (Verstärkungs-) Blechfläche. In den drei Figuren 5,6 und 7 ist der oberhalb des Verstärkungsblechs 2 dem Außenbereich zugewandt, und ist also der Bereich unterhalb des Verstärkungsblechs 2 dem Fahrzeuginneren zugewandt. Man erkennt in allen drei Figuren, dass der Antennenverbindungsstecker bezogen auf die Blechfläche teilweise hinter der durch das Gewichtsreduzierungsloch aufgespannten Fläche zu liegen kommt. Er ragt also weniger in den Fahrzeuginnenraum hinein was zu einem Mehr an Kopffreiheit führt.

### Bezugszeichenliste

- 01: hinterer Dachrahmen
- 02: Verstärkungsblech
- 03: Antennenkabel
- 04: Antennenverbindungsstecker
- 05: Abkantung
- 06: Gewichtsreduzierungsloch
- 07: Oberfläche
- 08: Halter
- 09: Aussparung
- 10: Wasserkanal
- 11: Konturlinie Kopf
- 12: Schwinglinie des Kopfes
- 13: Formhimmel
- 14: Linie geforderter Kopfraum
- 15: theoretische Formhimmellinie ohne Antennenkabeleinfluss

## Patentansprüche

1. Kraftfahrzeug mit einem Gewichtsreduzierungsloch (6) im hinteren Dachrahmen oder in einem dem hinteren Dachrahmen zugeordneten Verstärkungsblech, und mit einem Verbindungsstecker (4) für die Dachantenne, der, bezogen auf die Fahrzeuglängsrichtung zum hinteren Teil des Fahrzeugs hin zumindest teilweise hinter der durch das Gewichtsreduzierungsloch aufgespannten Fläche angeordnet ist, **dadurch gekennzeichnet, dass** für den Antennenverbindungsstecker ein mit dem Verstärkungsblech einstückig ausgebildeter Halter (8) vorgesehen ist.

2. Kraftfahrzeug nach Anspruch 1,
**dadurch gekennzeichnet,**
**dass** das Gewichtsreduzierungsloch in einem Abstand von etwa 100 mm bis etwa 150 mm, gerechnet von der Mitte des Fahrzeugs in Fahrzeugquerrichtung, angeordnet ist.

3. Kraftfahrzeug nach Anspruch 1,
**dadurch gekennzeichnet,**
**dass** der Rand des Gewichtsreduzierungslochs zumindest teilweise abgekantet ist.

## Claims

1. Motor vehicle having a weight-reducing hole (6) in the rear roof frame or in a stiffening plate associated with the rear roof frame, and having a connection plug (4) for the roof aerial that is disposed in relation to the vehicle longitudinal direction towards the rear part of the vehicle at least partially behind the area defined by the weight-reducing hole, **characterized in that** a holder (8) that is formed integrally with the stiffening plate is provided for the aerial connection plug.

2. Motor vehicle according to claim 1,
**characterized in**
**that** the weight-reducing hole is disposed at a distance of approximately 100 mm to approximately 150 mm, calculated from the centre of the vehicle in vehicle transverse direction.

3. Motor vehicle according to claim 1,
**characterized in**
**that** the edge of the weight-reducing hole is at least partially bent.

## Revendications

1. Véhicule automobile avec un trou de réduction de poids (6) dans le cadre arrière du toit ou dans une tôle de renforcement associée au cadre arrière du toit arrière, et avec un connecteur de raccordement (4) pour l'antenne de toit, qui, par rapport au sens longitudinal du véhicule, est agencé vers la partie arrière du véhicule et au moins en partie derrière la surface rendue ouverte par le trou de réduction de poids, **caractérisé en ce que** un élément de support (8) réalisé en une seule pièce avec la tôle de renforcement est prévu pour le connecteur de raccordement de l'antenne.

2. Véhicule automobile selon la revendication 1, **caractérisé en ce que** le trou de réduction de poids est agencé à une distance d'environ 100 mm jusqu'à environ 150 mm calculée à partir du milieu du véhicule dans la direction transversale du véhicule.

3. Véhicule automobile selon la revendication 1, **caractérisé en ce que** le bord du trou de réduction de poids est au moins en partie replié.
